# EUROPEAN PATENT SPECIFICATION

(11) **EP 3 704 456 B1**
(45) Date of publication and mention of the grant of the patent: **26.02.2025**
(21) Application number: 18872536.0
(22) Date of filing: 09.10.2018
(51) Int. Cl.: G01L 5/00, F16C 11/04, G01L 1/22, F16C 17/24, F16C 23/04, F16C 33/66, F16C 35/02

(54) **PIN BOLT PROVIDED WITH EQUIPMENT FOR STRESS REGISTRATION**
MIT AUSRÜSTUNG ZUR SPANNUNGSREGISTRIERUNG AUSGESTATTETER STIFTBOLZEN
BOULON À GOUPILLE DOTÉ D'UN ÉQUIPEMENT POUR L'ENREGISTREMENT DE CONTRAINTES

(30) Priority: 30.10.2017 NO 20171728
(43) Date of publication of application: 09.09.2020
(73) Proprietor: Bondura Technology AS, 4349 Bryne (NO)
(72) Inventor: KARLSEN, Øyvind, 4018 Stavanger (NO)
(74) Representative: Håmsø Patentbyrå AS
(86) International application number: PCT/NO2018/050240
(87) International publication number: WO 2019/088844

(56) References cited:
- WO-A1-2007/031111
- WO-A1-2007/031111
- WO-A1-2014/166976
- WO-A1-2014/166976
- WO-A1-85/02236
- WO-A1-85/02236
- WO-A1-90/15262
- WO-A1-90/15262
- WO-A1-92/14941
- WO-A1-92/14941
- DE-A1- 10 309 792
- DE-A1- 10 309 792
- NO-B1- 307 902
- NO-B1- 307 902
- NO-L- 980 580
- US-A- 3 695 096
- US-A- 3 695 096
- US-A- 3 841 771
- US-A- 3 841 771
- US-A- 4 627 341
- US-A- 4 627 341
- US-A- 5 251 986
- US-A- 5 251 986
- US-A1- 2002 002 861
- US-A1- 2002 002 861
- US-A1- 2009 250 581
- US-A1- 2009 250 581
- US-A1- 2009 313 788
- US-A1- 2009 313 788

## Description

The invention relates to a pivot bolt comprising a shaft provided with conical end portions and a middle portion, internally conical, radially expandable clamping sleeves which are axially displaceable on the conical end portions of the shaft, the pivot bolt being arranged to be clamped in first and second bores in a first element by axial displacement of the clamping sleeves on the conical end portions, and the middle portion being arranged to form a support for a second element.

In pivot joints, for example between the frame and boom of a lifting crane, an excavator, or a wheel loader, in some cases large forces are transmitted via one or more pivot bolts and adjacent bearings and clamping surfaces. Especially for large pivot joints, the pivot bolt is often made with conical end portions arranged to receive axially displaceable and radially expandable clamping sleeves for locking the pivot bolt against mounting lugs in the frame so that the pivot bolt is precisely fixed and does not rotate with the rotatable element that is supported on the pivot bolt. Pivot bolts of this type are known, for example from NO 307902.

Documents US 3 695 096 A and WO 85/02236 A1 show further examples of a pivot bolt.

Even though, for various reasons, pivot bolts of this kind are often greatly overdimensioned when it comes to absorbing shear forces transmitted to the pivot joint from the dead weight of the supported element and the applied load, it is an advantage if the strains on the pivot bolt can be monitored. An improved overview of the actual load on pivot joints of this kind may lead to the ability to dimension the pivot joints more optimally, and, in many cases, great savings may be made both in costs and in weight. Alternatively or additionally, there is often a need to monitor and possibly register the stress on associated elements, for example the tension on a wire of a crane boom connected to the pivot bolt.

The invention has for its object to remedy or reduce at least one of the drawbacks of the prior art or at least provide a useful alternative to the prior art.

The object is achieved through the features that are specified in the description below and in the claims that follow.

The invention provides a pivot bolt which comprises a shaft for interconnecting a first body and a second body. The shaft is at least provided with a first, externally conical end portion which is arranged to receive a first, internally conical, radially expandable clamping sleeve with a substantially cylindrical external surface, and the clamping sleeve is radially expandable. The first body is provided with a first bore and a second bore, and the second body is provided with a third bore arranged between the first and second bores of the first body, and the pivot bolt extends through the bores. By being displaced in the longitudinal direction of the shaft, the first clamping sleeve is arranged to be clamped against the first bore. A second end portion of the shaft is arranged to be supported in the second bore of the first body, and a middle portion of the shaft is arranged to be supported in the third bore of the second body. The second end portion of the shaft is preferably externally conical and arranged to receive a second, internally conical clamping sleeve with a substantially cylindrical external surface, corresponding to the arrangement at the first end portion of the shaft.

The pivot bolt includes means for the axial displacement of the clamping sleeve relative to the conical end portion, typically in the form of axial, threaded bores in the respective end portions of the shaft and a clamping plate which is arranged to be pressed against the end face of the clamping sleeve. The shaft may further be provided with channels for the supply of lubricants to a middle portion of the shaft.

The shaft is provided with a cut-out positioned centrically, extending from one of the end portions of the shaft. The cut-out preferably has a circular cross section.

The cut-out is adapted for receiving means, called a "measuring element" in what follows, for registering deformation of the shaft in a portion of the wall surface of the cut-out, typically deformation in the form of elongation or compression of the material in the wall surface. The measuring element may, for example, be a strain gauge which is attached to the wall of the cut-out and forms part of a Wheatstone bridge or another assembly for registering a change in the electrical resistance of the strain gauge. The wall of the cut-out preferably has a surface roughness Ra < 1,5.

The middle portion of the shaft is provided with two circular grooves with middle planes that are preferably perpendicular to the centre axis of the shaft. The bottom portions of the grooves preferably have semi-circular cross sections to prevent incipient cracking. The depth of the grooves is adapted according to the measurement accuracy required. The larger the groove depth is in relation to the largest diameter of the shaft, the better the achieved accuracy of measurement is.

The grooves are arranged in such a way that an inner groove side face, that is to say the groove side face facing the respective end portion of the shaft, is at a distance from the first bore or the second bore of the first element, that is to say so that the shaft is supported in the first element only by the portions of the shaft that are outside the grooves, that is to say the conical end portion with its clamping sleeve and the part of the middle portion that lies between the groove and the conical end portion. Thereby the grooves bring about tension concentrations in the shaft.

The tension concentrations that the grooves provide is used to achieve great accuracy in the measurement of stress on the bolt, as said measuring elements are attached to the wall of the cut-out, right within the grooves, preferably on a pitch circle coinciding with the middle plane of the respective groove.

It is an advantage if several measuring elements are placed within each groove, distributed on the periphery of the cut-out. If the critical load that the pivot bolt is to receive has a varying direction or the shaft is mounted with a random angular orientation, it is an advantage if two measuring elements placed with an angular distance of 90 degrees, possibly three measuring elements with an angular difference of 120 degrees, are used and the measuring elements are pre-tensioned; that is to say they can also register negative stress (compression) in the surface on which the measuring elements are mounted.

It is an advantage if the cut-out is a through cut-out and open at both ends, at least during the mounting of the measuring elements. After the mounting of the measuring elements, it may be an advantage to close the ends of the cut-out to prevent any ingress of fluids that may affect the properties of the measuring elements. The cut-out may be closed permanently or with detachable seals.

Wires connecting the measuring elements and any adjacent, associated components and a control unit, possibly a transmitter for wireless communication with a control unit, have been run out of the shaft through a mouth portion of the cut-out.

The invention is defined by the independent claim. The dependent claims define advantageous embodiments of the invention.

The invention relates more specifically to a pivot bolt for a pivot joint, the pivot bolt comprising:
- a shaft provided with first and second conical end portions and an intermediate cylindrical middle portion being arranged to form a support for a second element,
- a first internally conical, radially expandable clamping sleeve arranged axially displaceable on the first conical end portion, and
- a second internally conical, radially expandable clamping sleeve arranged axially displaceable on the second conical end portion, wherein the pivot bolt being arranged to be clamped in a first bore of a first element by the axial displacement of the first clamping sleeve on the first conical end portion, the pivot bolt being arranged to be clamped in a second bore of the first element by the axial displacement of the second clamping sleeve on the second conical end portion,
   wherein the first and the second clamping sleeves are provided with a conical internal surface, a cylindrical external surface, and a salient end portion forming an end face of the first and second clamping sleeves, and several slits breaking through at least the conical internal surface and the cylindrical external surface, and wherein one of the several slits also cuts through the salient end portion; and
   wherein clamping of the first and second clamping sleeves is provided by clamping plates being pressed against the end faces of the first and second clamping sleeves by means of clamping screws extending through bolt holes in the clamping plates and into threaded holes in the first and second end portions of the shaft, wherein the shaft is provided with
- a cut-out arranged centrically, and
- a groove arranged in the periphery of the middle portion near each of the conical end portions, wherein at least a groove side face faces the respective conical end portion, and is configured to lie at a distance from the first bore or the second bore, and wherein part of the middle portion of the shaft that lies between the grooves is configured not to touch said first and second bores of the first element; and the pivot bolt further comprises at least one measuring element attached on a wall in the cut-out and arranged on a pitch circle that coincides with a middle plane in the respective groove, the at least one measuring element arranged for registering a change in a material tension in the wall, the at least one measuring element is arranged for connection in a signal-communicating manner to a control unit.

Several measuring elements may be arranged on the same pitch circle.

Two measuring elements may be arranged on the same pitch circle, spaced apart by an angular distance of 90 degrees. Alternatively, three measuring elements may be arranged on the same pitch circle, spaced apart by an angular distance of 120 degrees.

The at least one measuring element may comprise a strain gauge. Alternatively, the at least one measuring element may comprise a pre-tensioned strain gauge.

The cut-out may have a circular cross section.

The invention further relates to a pivot joint arrangement comprising a pivot bolt according to the first aspect of the invention, the pivot joint arrangement further comprising a first element provided with a first bore and a second bore, wherein the pivot bolt is clamped in the first bore of the first element by the axial displacement of the first clamping sleeve on the first conical end portion and wherein the pivot bolt is clamped in the second bore of the first element by the axial displacement of the second clamping device on the second conical end portion, the pivot joint further comprising a second element, wherein the second element is supported by the middle portion, and
wherein the pivot joint arrangement further comprises a control unit being connected in a signal-communicating manner to the at least one measuring unit.

In what follows, an example of a preferred embodiment is described, which is visualized in the accompanying drawings, in which:
- Figure 1: shows an axial section through a pivot joint provided with a pivot bolt according to the invention, the pivot bolt being clamped in a first element, and a second element being pivotably supported on the pivot bolt;
- Figures 1a and 1b: show, in sections, a cross section through the pivot bolt with alternative positionings of measuring elements on a wall surface in a cut-out in the pivot bolt;
- Figure 2: shows a perspective drawing of the pivot bolt; and
- Figure 3: shows a perspective drawing, on a smaller scale, of a pivot joint with the pivot bolt according to the invention connected to a control unit.

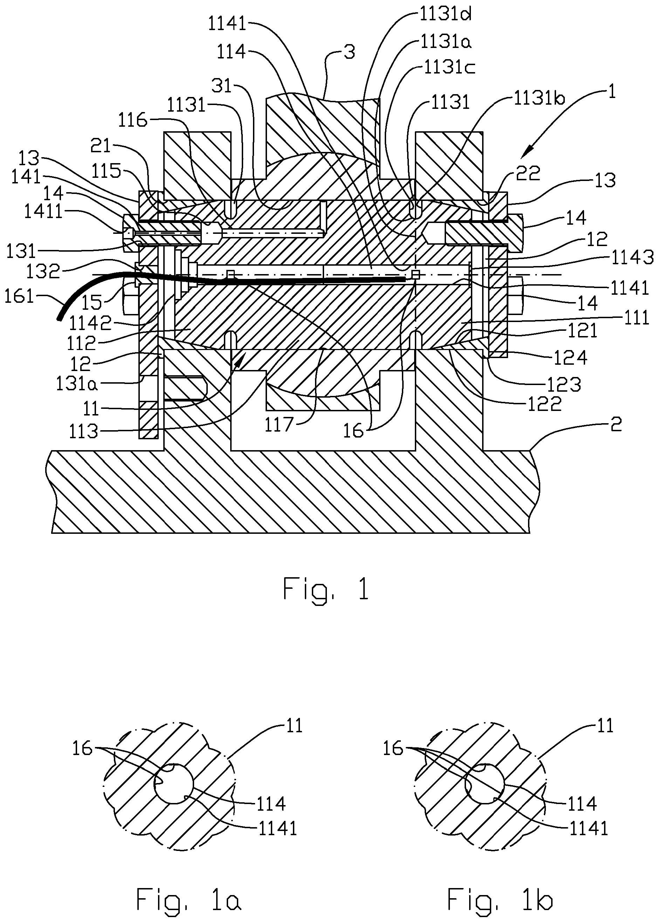

Reference is first made to figure 1. A pivot joint is formed by a pivot bolt 1 extending through first and second bores 21, 22 in a first element 2. A second element 3 is pivotably supported on the pivot bolt 1 by the pivot bolt 1 extending through a third bore 31 in the second element 3 and being arranged between the bores 21, 22 of the first element 2.

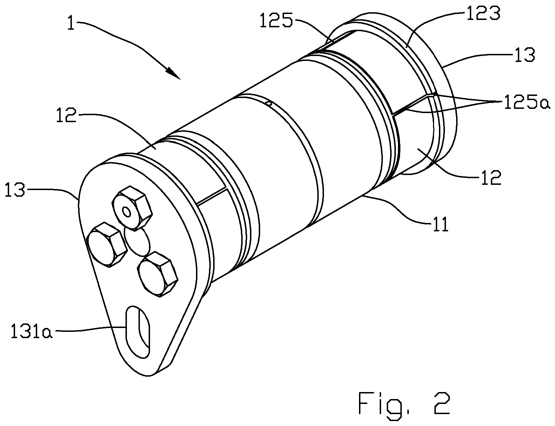

The pivot bolt 1 is formed of a shaft 11 provided with conical first and second end portions 111, 112 and an intermediate cylindrical middle portion 113. The end portions 111, 112 are each arranged to receive a respective clamping sleeve 12 provided with a conical internal surface 121 and a cylindrical external surface 122. A salient end portion 123 forms an end face 124. The clamping sleeves 12 are provided with several slits 125 breaking through the conical internal and the cylindrical external surfaces 121, 122 (see figure 2) at least. A slit 125a also cuts through the salient end portion 123 (see figure 2). Thereby, the clamping sleeves 12 are radially expandable by axial displacement on the conical end portions 111, 112 of the shaft 11, in order thereby to be clamped in the bores 21, 22 of the first element 2. The clamping is provided by clamping plates 13 being pressed against the end faces 124 of the clamping sleeves 12 by means of clamping screws 14 extending through bolt holes 131 in the clamping plates 13 and into threaded holes 115 in the end portions 111, 112 of the shaft 11. The clamping plates 13 may be provided with a further bolt hole 131a for optional attachment of the clamping plate 13 to the first element 2 to simplify the positioning of the pivot bolt 1.

A clamping screw 14 is provided with a passage 141 communicating with a lubrication groove 117, which is arranged on the periphery of the shaft 11, via a channel 116 in the shaft 11. In a mouth portion 1411, the passage 141 of the clamping screw 14 is arranged to receive a lubricating nipple (not shown).

Arranged near the transitions between each of the conical end portions 111, 112 of the shaft 11 and the middle portion 113, there are circular grooves 1131 defined by first (outer) groove side faces 1131b, and second (inner) groove side faces 1131c and rounded bottom portions 1131a. A middle plane in the groove is indicated by the reference numeral 1131d. The middle plane 1131d is perpendicular to the centre axis of the shaft 11.

The shaft 11 is provided with a through cut-out 114 placed centrically in the shaft 11 and typically formed as a bore with a circular cross section. Mouth portions 1142 are formed for receiving sealing means 1143, shown schematically as a sealing plate 1143 in one of the mouth portions 1142 here.

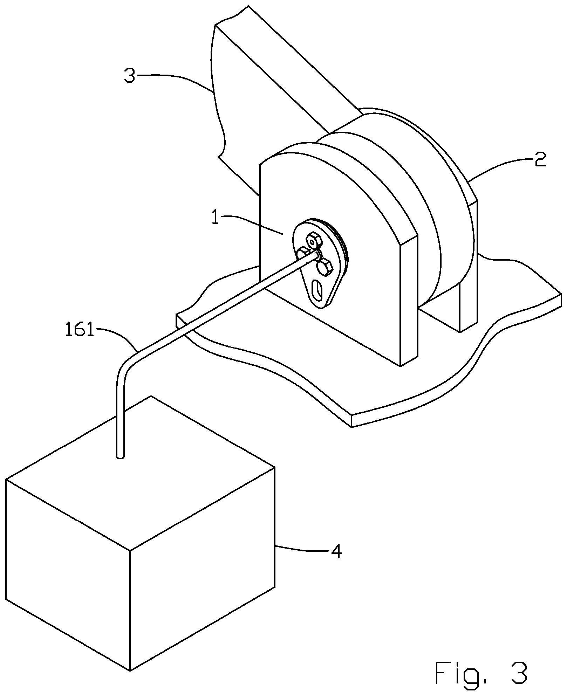

On a wall surface 1141 in the through cut-out 114 of the shaft 11, radially within the external grooves 1131 near the end portions 111, 112 of the shaft 11, several measuring elements 16, typically in the form of strain gauges, are attached. The measuring elements 16 are distributed on pitch circles on the periphery of the cut-out 114. In one embodiment, two measuring elements 16 are placed at each groove 1131 with an angular distance of 90° (see figure 1a). In another embodiment, three measuring elements 16 are placed with an angular distance of 120° (see figure 1b). The measuring elements 16 are connected to a signal wire 161 having been run out of the cut-out 114 of the shaft 11 through a seal 15 arranged in a centre cut-out 132 in one of the clamping plates 13. The signal wire 161 is connected to a control unit 4 arranged at a distance from the pivot bolt 1 (see figure 3) by direct connection or wirelessly via a suitable signal-transmission unit (not shown). Necessary components (not shown) cooperating with the measuring elements 16 to provide readable measuring results, for example to convert the altered resistance of a strain gauge by altered material tension into a relevant measurement by the strain gauge forming part of a Wheatstone bridge or an equivalent, may be arranged in or at the cut-out 114 of the shaft 11 or in association with the control unit 4.

When the pivot bolt 1 is being mounted, it is placed in such a way in the bores 21, 22 of the first element 2 that the grooves 1131 extend inwards from said bores 21, 22; that is to say, so that the part of the middle portion 113 of the shaft 11 that lies between the grooves 1131, will not get into touch with said bores 21, 22. Thereby, when absorbing load from the second element 3, the shaft 11 will be subjected to a strain peak in the portions within the grooves 1131. These strain peaks are registered by the measuring elements 16 which are placed exactly where the stress on the shaft 11 is greatest.

Variations in the distance between the bores 21, 22 and the second (inner) groove side faces of the grooves 1131 have little influence on the measuring accuracy of the measuring elements 16. The deciding factors are the fact that the bores 21, 22 of the first element 2 do not extend in over the part of the middle portion 113 that lies between the grooves 1131, and the positioning of the measuring elements 16 relative to the respective groove 1131.

It is an advantage if the measuring elements 16 are arranged in such a way that they can also register elastic compression of the surface to which they are is attached. This can be achieved by the use of pre-tensioned stain gauges, for example.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

The fact that some features are indicated in mutually different dependent claims does not indicate that a combination of these features cannot be used with advantage.

## Claims

1. A pivot bolt (1) for a pivot joint, the pivot bolt (1) comprising:
- a shaft (11) provided with first and second conical end portions (111, 112) and an intermediate cylindrical middle portion (113) being arranged to form a support for a second element (3),
- a first internally conical, radially expandable clamping sleeve (12) arranged axially displaceable on the first conical end portion (111), and
- a second internally conical, radially expandable clamping sleeve (12) arranged axially displaceable on the second conical end portion (112), wherein the pivot bolt (1) being arranged to be clamped in a first bore (21) of a first element (2) by the axial displacement of the first clamping sleeve (12) on the first conical end portion (111), the pivot bolt (1) being arranged to be clamped in a second bore (22) of the first element (1) by the axial displacement of the second clamping sleeve (12) on the second conical end portion (112),
wherein the first and the second clamping sleeves (12) are provided with a conical internal surface (121), a cylindrical external surface (122), and a salient end portion (123) forming an end face (124) of the first and second clamping sleeves (12), and with several slits (125) breaking through at least the conical internal surface (121) and the cylindrical external surface (122), and wherein one of the several slits (125a) also cuts through the salient end portion (123); and
wherein clamping of the first and second clamping sleeves (12) is provided by clamping plates (13) being pressed against the end faces (124) of the first and second clamping sleeves (12) by means of clamping screws (14) extending through bolt holes (131) in the clamping plates (13) and into threaded holes (115) in the first and second end portions (111, 112) of the shaft (11); wherein the shaft (11) is provided with:
- a cut-out (114) arranged centrically, and
- a groove (1131) arranged in the periphery of the middle portion (113) near each of the conical end portions (111, 112), wherein at least a groove side face (1131c) faces the respective conical end portion (111, 112), and is configured to lie at a distance from the first bore (21) or the second bore (22), and wherein,
the part of the middle portion (113) of the shaft (11) that lies between the grooves (1131) is configured not to touch said first and second bores (21, 22) of the first element (2); and the pivot bolt (1) further comprises at least one measuring element (16) attached on a wall (1141) in the cut-out (114) and arranged on a pitch circle that coincides with a middle plane (1131d) in the respective groove (1131), the at least one measuring element (16) arranged for registering a change in a material tension in the wall (1141), the at least one measuring element (16) is arranged for connection in a signal-communicating manner to a control unit (4).

2. The pivot bolt (1) according to claim 1, wherein several measuring elements (16) are arranged on the same pitch circle.

3. The pivot bolt (1) according to claim 2, wherein two measuring elements (16) are arranged, spaced apart by an angular distance of 90 degrees.

4. The pivot bolt (1) according to claim 2, wherein three measuring elements (16) are arranged, spaced apart by an angular distance of 120 degrees on the same pitch circle.

5. The pivot bolt (1) according to any one of the preceding claims, wherein the at least one measuring element (16) comprises a strain gauge.

6. The pivot bolt (1) according to any one of the preceding claims 1 - 4, wherein the at least one measuring element (16) comprises a pre-tensioned strain gauge.

7. The pivot bolt (1) according to any one of the preceding claims, wherein the cut-out (114) has a circular cross section.

8. A pivot joint arrangement comprising:
- a pivot bolt (1) according to any of claims 1-7, the pivot joint arrangement further comprising a first element (2) provided with a first bore (21) and a second bore (22), wherein the pivot bolt (1) is clamped in the first bore (21) of the first element (2) by the axial displacement of the first clamping sleeve (12) on the first conical end portion (111) and wherein the pivot bolt (1) is clamped in the second bore (22) of the first element (2) by the axial displacement of the second clamping device (12) on the second conical end portion (112), the pivot joint further comprising a second element (3), wherein the second element (3) is supported by the middle portion (113), and
wherein the pivot joint arrangement further comprises a control unit (4) being connected in a signal-communicating manner to the at least one measuring unit.

## Patentansprüche

1. Drehbolzen (1) für ein Drehgelenk, wobei der Drehbolzen (1) Folgendes umfasst:
- eine Welle (11), die mit einem ersten und einem zweiten konischen Endabschnitt (111, 112) und einem dazwischenliegenden zylindrischen Mittelabschnitt (113) bereitgestellt ist, die so angeordnet sind, dass sie eine Stütze für ein zweites Element (3) bilden,
- eine erste innen konische, radial erweiterbare Klemmhülse (12), die auf dem ersten konischen Endabschnitt (111) axial verschiebbar angeordnet ist, und
- eine zweite innen konische, radial erweiterbare Klemmhülse (12), die auf dem zweiten konischen Endabschnitt (112) axial verschiebbar angeordnet ist, wobei der Drehbolzen (1) angeordnet ist, um durch die axiale Verschiebung der ersten Klemmhülse (12) auf dem ersten konischen Endabschnitt (111) in einer ersten Bohrung (21) eines ersten Elements (2) festgeklemmt zu werden, wobei der Drehbolzen (1) angeordnet ist, um durch die axiale Verschiebung der zweiten Klemmhülse (12) auf dem zweiten konischen Endabschnitt (112) in einer zweiten Bohrung (22) des ersten Elements (1) festgeklemmt zu werden,
wobei die erste und die zweite Klemmhülse (12) mit einer konischen inneren Oberfläche (121), einer zylindrischen äußeren Oberfläche (122) und einem vorstehenden Endabschnitt (123) bereitgestellt sind, der eine Endfläche (124) der ersten und der zweiten Klemmhülse (12) bildet, und mit mehreren Schlitzen (125) bereitgestellt sind, die zumindest durch die konische innere Oberfläche (121) und die zylindrische äußere Oberfläche (122) brechen, und wobei einer der mehreren Schlitze (125a) auch durch den vorstehenden Endabschnitt (123) schneidet; und wobei ein Festklemmen der ersten und der zweiten Klemmhülse (12) dadurch bereitgestellt wird, dass Klemmplatten (13) gegen die Endflächen (124) der ersten und der zweiten Klemmhülse (12) mittels Klemmschrauben (14) gedrückt werden, die sich durch Bolzenlöcher (131) in den Klemmplatten (13) und in Gewindelöcher (115) in dem ersten und dem zweiten Endabschnitt (111, 112) der Welle (11) erstrecken; wobei die Welle (11) bereitgestellt ist mit:
- einer zentrisch angeordneten Aussparung (114), und
- einer Nut (1131), die im Umfang des Mittelabschnitts (113) in der Nähe jedes der konischen Endabschnitte (111, 112) angeordnet ist, wobei mindestens eine Nutseitenfläche (1131c) dem jeweiligen konischen Endabschnitt (111, 112) zugewandt ist und so konfiguriert ist, dass sie in einem Abstand von der ersten Bohrung (21) oder der zweiten Bohrung (22) liegt, und wobei der Teil des Mittelabschnitts (113) der Welle (11), der zwischen den Nuten (1131) liegt, so konfiguriert ist, dass er die erste und die zweite Bohrung (21, 22) des ersten Elements (2) nicht berührt; und der Drehbolzen (1) weiter mindestens ein Messelement (16) umfasst, das an einer Wand (1141) in der Aussparung (114) angebracht ist und auf einem Teilkreis angeordnet ist, der mit einer Mittelebene (1131d) in der jeweiligen Nut (1131) zusammenfällt, das mindestens ein Messelement (16) zum Registrieren einer Veränderung einer Materialspannung in der Wand (1141) angeordnet ist, das mindestens ein Messelement (16) zur Verbindung in einer signalkommunizierenden Weise mit einer Steuereinheit (4) angeordnet ist.

2. Drehbolzen (1) nach Anspruch 1, wobei mehrere Messelemente (16) auf dem gleichen Teilkreis angeordnet sind.

3. Drehbolzen (1) nach Anspruch 2, wobei zwei Messelemente (16) durch einen Winkelabstand von 90 Grad voneinander beabstandet angeordnet sind.

4. Drehbolzen (1) nach Anspruch 2, wobei drei Messelemente (16) durch einen Winkelabstand von 120 Grad voneinander beabstandet auf dem gleichen Teilkreis angeordnet sind.

5. Drehbolzen (1) nach einem der vorstehenden Ansprüche, wobei das mindestens eine Messelement (16) einen Spannungsprüfer umfasst.

6. Drehbolzen (1) nach einem der vorstehenden Ansprüche 1 bis 4, wobei das mindestens ein Messelement (16) einen vorgespannten Spannungsprüfer umfasst.

7. Drehbolzen (1) nach einem der vorstehenden Ansprüche, wobei die Aussparung (114) einen kreisförmigen Querschnitt aufweist.

8. Drehgelenkanordnung, umfassend:
- einen Drehbolzen (1) nach einem der Ansprüche 1-7, wobei die Drehgelenkanordnung weiter ein erstes Element (2) umfasst, das mit einer ersten Bohrung (21) und einer zweiten Bohrung (22) bereitgestellt ist, wobei der Drehbolzen (1) durch die axiale Verschiebung der ersten Klemmhülse (12) auf dem ersten konischen Endabschnitt (111) in der ersten Bohrung (21) des ersten Elements (2) festgeklemmt wird, und wobei der Drehbolzen (1) durch die axiale Verschiebung der zweiten Klemmvorrichtung (12) auf dem zweiten konischen Endabschnitt (112) in der zweiten Bohrung (22) des ersten Elements (2) festgeklemmt wird, wobei das Drehgelenk weiter ein zweites Element (3) umfasst, wobei das zweite Element (3) durch den Mittelabschnitt (113) gestützt wird, und wobei die Drehgelenkanordnung weiter eine Steuereinheit (4) umfasst, die mit der mindestens einen Messeinheit auf signalkommunizierende Weise verbunden ist.

## Revendications

1. Boulon d'articulation (1) pour une articulation pivot, le boulon d'articulation (1) comprenant :
- un arbre (11) pourvu de première et seconde parties d'extrémité conique (111, 112) et une partie centrale cylindrique intermédiaire (113) étant agencée pour former un support pour un second élément (3),
- un premier manchon de serrage, radialement extensible et conique vers l'intérieur (12) agencé axialement de manière à être déplaçable sur la première partie d'extrémité conique (111), et
- un second manchon de serrage, radialement extensible et conique vers l'intérieur (12) agencé axialement de manière à être déplaçable sur la seconde partie d'extrémité conique (112), dans lequel le boulon d'articulation (1) étant agencé pour être serré dans un premier alésage (21) d'un premier élément (2) par le déplacement axial du premier manchon de serrage (12) sur la première partie d'extrémité conique (111), le boulon d'articulation (1) étant agencé pour être serré dans un second alésage (22) du premier élément (1) par le déplacement axial du second manchon de serrage (12) sur la seconde partie d'extrémité conique (112),
dans lequel le premier et le second manchon de serrage (12) sont pourvus d'une surface interne conique (121), d'une surface externe cylindrique (122) et d'une partie d'extrémité saillante (123) formant une face d'extrémité (124) des premier et second manchons de serrage (12), et de plusieurs fentes (125) perçant au moins la surface interne conique (121) et la surface externe cylindrique (122), et
dans lequel une des plusieurs fentes (125a) coupe également à travers la partie d'extrémité saillante (123) ; et dans lequel le serrage des premier et second manchons de serrage (12) est fourni par des plaques de serrage (13) qui sont pressées contre les faces d'extrémité (124) des premier et second manchons de serrage (12) à l'aide de vis de serrage (14) qui s'étendent à travers des trous de boulon (131) dans les plaques de serrage (13) et jusque dans des trous filetés (115) dans les première et seconde parties d'extrémité (111, 112) de l'arbre (11) ; dans lequel l'arbre (11) est pourvu de :
- une découpe (114) agencée de manière centrée, et
- une rainure (1131) agencée sur la périphérie de la partie centrale (113) à proximité de chacune des parties d'extrémité conique (111, 112), dans lequel au moins une face latérale de rainure (1131c) fait face à la partie d'extrémité conique (111, 112) respective, et est configurée pour se trouver à une distance du premier (21) ou du second alésage (22), et dans lequel,
la partie de la partie centrale (113) de l'arbre (11) qui se trouve entre les rainures (1131) est configurée pour ne pas être en contact avec lesdits premier et second alésages (21, 22) du premier élément (2) ; et le boulon d'articulation (1) comprend en outre au moins un élément de mesure (16) fixé sur une paroi (1141) dans la découpe (114) et agencé sur un cercle primitif qui coïncide avec un plan médian (1131d) dans la rainure respective (1131), l'au moins un élément de mesure (16) étant agencé pour enregistrer un changement de tension de matériau dans la paroi (1141), et ledit au moins un élément de mesure (16) étant agencé pour être connecté d'une manière à communication de signal à une unité de commande (4).

2. Boulon d'articulation (1) selon la revendication 1, dans lequel plusieurs éléments de mesure (16) sont agencés sur le même cercle primitif.

3. Boulon d'articulation (1) selon la revendication 2, dans lequel deux éléments de mesure (16) sont agencés, de manière espacée d'une distance angulaire de 90 degrés.

4. Boulon d'articulation (1) selon la revendication 2,
dans lequel trois éléments de mesure (16) sont agencés, de manière espacée d'une distance angulaire de 120 degrés sur le même cercle primitif.

5. Boulon d'articulation (1) selon l'une quelconque des revendications précédentes, dans lequel ledit au moins un élément de mesure (16) comprend une jauge de contrainte.

6. Boulon d'articulation (1) selon l'une quelconque des revendications précédentes 1 à 4, dans lequel ledit
au moins un élément de mesure (16) comprend une jauge de contrainte précontrainte.

7. Boulon d'articulation (1) selon l'une quelconque des revendications précédentes, dans lequel la découpe (114) présente une section transversale circulaire.

8. Agencement d'articulation pivot comprenant :
- un boulon d'articulation (1) selon l'une quelconque des revendications 1 à 7, l'agencement d'articulation pivot comprenant en outre un premier élément (2) pourvu d'un premier alésage (21) et d'un second alésage (22), dans lequel le boulon d'articulation (1) est serré dans le premier alésage (21) du premier élément (2) par le déplacement axial du premier manchon de serrage (12) sur la première partie d'extrémité conique (111) et dans lequel le boulon d'articulation (1) est serré dans le second alésage (22) du premier élément (2) par le déplacement axial du second dispositif de serrage (12) sur la seconde partie d'extrémité conique (112), l'articulation pivot comprenant en outre un second élément (3), dans lequel le second élément (3) est supporté par la partie centrale (113), et
dans lequel l'agencement d'articulation pivot comprend en outre une unité de commande (4) qui est connectée d'une manière à communication de signal à l'au moins une unité de mesure.
